**Europäisches Patentamt**

**European Patent Office**

**Office européen des brevets**

(11) Veröffentlichungsnummer: **0 133 298**
**B1**

# EUROPÄISCHE PATENTSCHRIFT

(45) Veröffentlichungstag der Patentschrift:
**24.06.87**

(21) Anmeldenummer: **84108873.5**

(22) Anmeldetag: **26.07.84**

(51) Int. Cl.⁴: **H 04 B 3/23**

(54) Verfahren und Schaltungsanordnung zur Kompensation von Echosignalen.

(30) Priorität: **29.07.83 DE 3327467**

(43) Veröffentlichungstag der Anmeldung:
**20.02.85 Patentblatt 85/8**

(45) Bekanntmachung des Hinweises auf die Patenterteilung:
**24.06.87 Patentblatt 87/26**

(84) Benannte Vertragsstaaten:
**AT BE CH DE FR GB IT LI LU NL SE**

(56) Entgegenhaltungen:
**EP - A - 0 019 194**
**DE - A - 3 120 639**
**US - A - 4 072 830**
**US - A - 4 074 086**

**IBM TECHNICAL DISCLOSURE BULLETIN, Band 12, Nr. 7, Dezember 1969, Seiten 980-981, New York, US; G.B. MARENIN: "Binary synchronous comnmunication internal clock"**

(73) Patentinhaber: **Siemens Aktiengesellschaft Berlin und München, Wittelsbacherplatz 2, D-8000 München 2 (DE)**

(72) Erfinder: **Schollmeier, Gero, Dr.-Ing., Frühlingstrasse 6, D-8035 Gauting (DE)**
Erfinder: **Saller, Heinrich, Dipl.-Ing., Michlbauerstrasse 3, D-8021 Neuried (DE)**

# Beschreibung

Die Erfindung betrifft ein Verfahren und eine Schaltungsanordnung für die Kompensation von Echosignalen in für die Duplexübertragung von Digitalsignalen im Gleichlageverfahren mit einer Zweidraht-Leitung verbundenen, jeweils eine Sendeeinrichtung und eine Empfangseinrichtung aufweisenden Signalübertragungseinrichtungen, in denen einerseits jeweils für die Kompensation der Echosignale, die bei der Abgabe von Digitalsignalen von der Sendeeinrichtung einer Signalübertragungseinrichtung her an die Zweidraht-Leitung in der zugehörigen Empfangseinrichtung auftreten, von einem Echokompensator Kompensationssignale erzeugt werden, welche in der Empfangseinrichtung der betreffenden Signalübertragungseinrichtung von den in zeitlich konstanten Abständen festgelegten Abtastzeitpunkten mit den Echosignalen empfangenen Digitalsignalen subtrahiert werden, und in denen andererseits für eine Regelung der Phasenlage von durch ihr Auftreten die Abtastzeitpunkte festlegenden Taktimpulsen einer Taktimpulsfolge dienende Verstellinformationen von der Empfangseinrichtung an eine Taktversorgungseinrichtung abgegeben werden.

Es ist bereits bekannt (z.B. aus DE-PS 2920575), für die Kompensation von Echosignalen in für die Duplexübertragung von Digitalsignalen im Gleichlageverfahren mit einer Zweidraht-Leitung verbundenen Signalübertragungseinrichtungen jeweils einen Echokompensator vorzusehen, welcher dem zeitlichen Verlauf der Echosignale nachgebildete Kompensationssignale erzeugt, die von den mit den Echosignalen empfangenen Digitalsignalen subtrahiert werden. Dafür kann z.B. bei der Abgabe von Digitalsignalen von einer der Signalübertragungseinrichtungen an die Zweidraht-Leitung in dem zugehörigen Echokompensator pro abgegebenen Signalbit ein Echokompensationswert gebildet werden, welcher dann von einem empfangsseitig zu einem bestimmten Abtastzeitpunkt abgetasteten Signalbit der mit den Echosignalen empfangenen Digitalsignale subtrahiert wird. Dies setzt voraus, dass die für die Abtastung der einzelnen Signalbits festgelegten Abtastzeitpunkte eine extrem hohe Konstanz aufweisen. Bereits geringfügige Abweichungen von den Abtastzeitpunkten können hohe, nicht kompensierte Echoanteile hervorrufen, da die in einer Signalübertragungseinrichtung auftretenden Echosignale bei einer Übertragung von Digitalsignalen über grössere Entfernungen wesentlich grösser sein können als die eigentlichen, der betreffenden Signalübertragungseinrichtung als Empfangssignale zugeführten Digitalsignale. Die für einen störungsfreien Betrieb derartiger Signalübertragungseinrichtungen geforderte hohe Konstanz der Abtastzeitpunkte kann nun dadurch erreicht werden, dass in den Signalübertragungseinrichtungen jeweils eine Taktversorgungseinrichtung vorgesehen wird, die bereits geringste Schwankungen der Phasenlage von durch ihr Auftreten die Abtastzeitpunkte festlegenden Taktimpulsen digital ausregelt. Hierfür ist in einer solchen Taktversorgungseinrichtung ein Verschiebetakt für die Verschiebung der Phasenlage erforderlich, dessen Frequenz wesentlich höher liegt als die Frequenz der zu übertragenden Digitalsignale. Dies kann bei einer hohen Signalübertragungsgeschwindigkeit dazu führen, dass der Verschiebetakt nicht mehr mit üblichen integrierten Schaltkreisen der Digitaltechnik verabreicht werden kann.

Der Erfindung liegt nun die Aufgabe zugrunde, einen Weg zu zeigen, wie bei einem Verfahren der eingangs betrachteten Art auch dann noch eine Kompensation von Echosignalen in Signalübertragungseinrichtungen möglich ist, wenn in diesen eine Verschiebung der Phasenlage der Abtastzeitpunkte lediglich in groben Schritten erfolgt.

Gelöst wird die vorstehend aufgezeigte Aufgabe bei einem Verfahren der eingangs betrachteten Art erfindungsgemäss dadurch, dass bei empfangsseitiger Ermittlung von eine Verschiebung der Phasenlage der Taktimpulse um einen innerhalb eines vorgegebenen Phasenrasterschrittes liegenden Betrag fordernden Steuerinformationen diese unter Beibehaltung der jeweils gerade eingestellten Phasenlage akkumuliert werden, dass anhand der akkumulierten Steuerinformationen solche mit den genannten Kompensationssignalen zu summierende Korrektursignale gebildet werden, dass durch die geforderte, jedoch nicht durchgeführte Verschiebung der Phasenlage der Taktimpulse unkompensiert gebliebene Echosignale aufgehoben werden, und dass bei Überschreiten einer vorgegebenen oberen Schwelle bzw. bei Unterschreiten einer vorgegebenen unteren Schwelle durch die akkumulierten Steuerinformationen lediglich die Phasenlage der Taktimpulse um einen Phasenrasterschritt verschoben wird.

Die Erfindung bringt den Vorteil mit sich, dass bei sich ändernden Abtastzeitpunkten eine Verschiebung der Phasenlage der die Abtastzeitpunkt festlegenden Taktimpulse lediglich in groben Phasenrasterschritten erforderlich ist. Anstelle einer Feinverschiebung der Phasenlage werden mit den Kompensationssignalen zu summierende Korrektursignale erzeugt. Auf diese Weise ist es möglich, in den Signalübertragungseinrichtungen jeweils eine mit einem Verschiebetakt relativ niedriger Frequenz arbeitende, aus üblichen integrierten Schaltkreisen der Digitaltechnik aufgebaute Taktversorgungseinrichtung zu verwenden.

Zweckmässige Ausgestaltungen des Verfahrens gemäss der Erfindung und eine Schaltungsanordnung zur Durchführung des erfindungsgemässen Verfahrens ergeben sich aus den Unteransprüchen.

Anhand von Zeichnungen wird die Erfindung nachstehend beispielsweise näher erläutert.

Fig. 1 zeigt in einem Blockschaltbild eine Signalübertragungseinrichtung, bei der die Erfindung angewandt ist;

Fig. 2 zeigt in einem Blockschaltbild den näheren Aufbau einer Korrektureinrichtung, die in Fig. 1 lediglich schematisch dargestellt ist;

Fig. 3 zeigt ein Diagramm, auf das im Zuge der Erläuterung der Erfindung eingegangen wird.

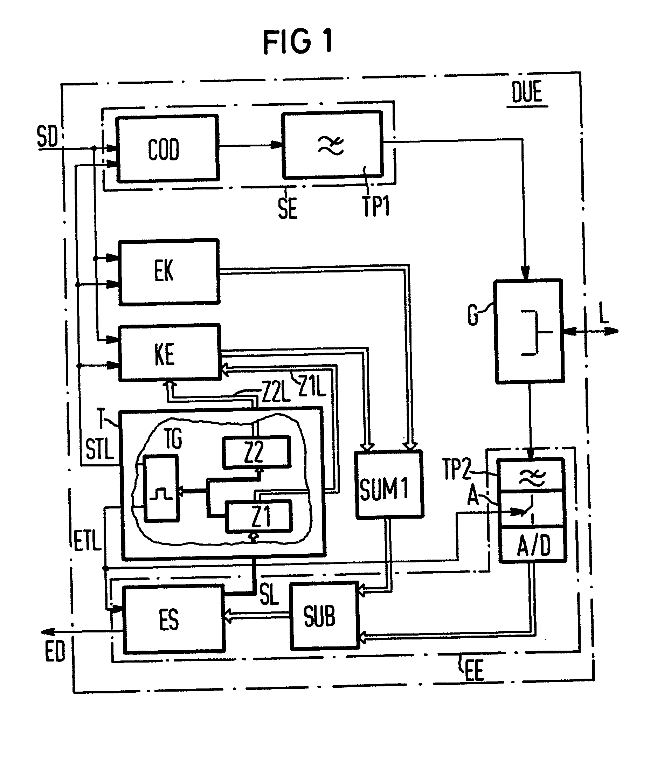

In Fig. 1 ist eine Signalübertragungseinrichtung DUE dargestellt, die über eine Signalsendeleitung SD und eine Signalempfangsleitung ED mit einer Signalsende-/Empfangseinrichtung sowie über eine Gabelschaltung G mit einer Zweidraht-Leitung L verbunden sein möge. Bei der Signalsende-/Empfangseinrichtung kann es sich dabei entweder um eine Teilnehmerendeinrichtung oder um eine Einrichtung einer Vermittlungsstelle handeln. Die Zweidraht-Leitung L möge eine für eine Duplexübertragung von Digitalsignalen im Gleichlageverfahren ausgelegte Teilnehmeranschlussleitung sein, an deren anderem Ende eine weitere Signalübertragungseinrichtung angeschlossen sei.

Mit der genannten Signalsendeleitung SD ist eine Sendeeinrichtung SE verbunden, die die von der Signalsende-/Empfangseinrichtung abgegebenen Digitalsignale aufnimmt und diese nach einer Umsetzung in eine für die Übertragung auf der Zweidraht-Leitung geeignete Form als Sendesignale an die Gabelschaltung G abgibt. Die Sendeeinrichtung weist hierzu einen Codierer COD auf, der beispielsweise eine Umsetzung von Binärsignalen in pseudoternäre Signale vornimmt. Für diese Umsetzung werden dem Codierer über eine Sendetaktleitung STL von einer Taktversorgungseinrichtung T her Sendetaktimpulse zugeführt. Dem Codierer ist zur Impulsformung der umgesetzten Digitalsignale ein Tiefpassfilter TP1 nachgeschaltet.

Die Gabelschaltung G gibt einerseits die ihr von der Sendeeinrichtung SE zugeführten Sendesignale an die Zweidraht-Leitung L ab und übernimmt andererseits ihr von einer weiteren Signalübertragungseinrichtung über die Zweidraht-Leitung als Empfangssignale zugeführte Digitalsignale und leitet diese an eine Empfangseinrichtung EE der Signalübertragungseinrichtung weiter. Zusätzlich zu diesen Empfangssignalen gibt die Gabelschaltung an die Empfangseinrichtung noch als Echosignale bezeichnete Störsignale ab, welche bei der Abgabe von Sendesignalen entweder direkt in der Gabelschaltung durch eine nicht vollständige Entkopplung der Übertragungswege oder an Reflektionsstellen der Zweidraht-Leitung entstehen. Damit treten am Ausgang der Gabelschaltung G nicht nur die tatsächlichen Empfangssignale sondern ein aus diesen und den Echosignalen gebildetes Signalgemisch auf. In diesem Signalgemisch können im übrigen die Echosignale bei einer langen Zweidraht-Leitung wesentlich grösser sein als die eigentlichen Empfangssignale, beispielsweise um 40 dB.

In der Empfangseinrichtung EE durchläuft das gerade erwähnte Signalgemisch zunächst zur Eliminierung höherfrequenter Signalanteile ein Tiefpassfilter TP2. Diesem Tiefpassfilter ist ein Abtaster A nachgeschaltet, der zu vorgegebenen Abtastzeitpunkten das frequenzmässig beschnittene Signalgemisch abtastet. Die Abtastzeitpunkte können dabei so gewählt sein, dass jedes auf der Zweidraht-Leitung übertragene Digitalsignal (Signalbit) einmal oder mehrfach abgetastet wird. Hierzu erhält der Abtaster A über eine Empfangstaktleitung ETL von der bereits erwähnten Taktversorgungseinrichtung T her entsprechende Empfangstaktimpulse zugeführt. Die auf diese Weise gewonnenen Abtastwerte werden anschliessend einem Analog-Digital-Wandler A/D zugeführt, der den jeweiligen Abtastwerten entsprechende codierte Bitgruppe an seinen parallelen Ausgängen abgibt. Mit den einzelnen Bitgruppen, die immer noch in codierter Form Abtastwerte des frequenzmässig beschnittenen Signalgemisches darstellen, werden dann erste Eingänge eines Subtrahierers SUB angesteuert. Weiteren Eingängen dieses Subtrahierers werden dabei gleichzeitig zu jeder Bitgruppe eine dem darin enthaltenen Echoanteil entsprechende Bitgruppe zugeführt, so dass am Ausgang des Subtrahierers Bitgruppen auftreten, die lediglich noch die den Empfangssignalen entsprechenden Signalanteile in codierter Form enthalten. Aus diesen Bitgruppen werden schliesslich in einer dem Subtrahierer nachgeschalteten Empfangssteuerung ES Binärsignale abgeleitet, die über die bereits erwähnte Signalempfangsleitung ED an die mit der Signalübertragungseinrichtung verbundene Signalsende-/Empfangseinrichtung abgegeben werden. Die Empfangssteuerung erhält dafür über die bereits erwähnte Empfangstaktleitung ETL Empfangstaktimpulse von der Taktversorgungseinrichtung T zugeführt.

Die Empfangssteuerung ES weist ausserdem eine Einrichtung zur Phasenregelung der von der Taktversorgungseinrichtung T abgegebenen Taktimpulse auf. Diese Einrichtung gibt immer dann eine Steuerinformation über ein Leitungssystem SL ab, wenn die Verschiebung der Phasenlage der Taktimpulse um einen vorgegebenen Betrag erforderlich ist. Die Steuerinformationen bestehen dabei jeweils aus einem Steuerimpuls und einem gesonderten, die Richtung der erforderlichen Verschiebung angegebenen Binärsignal.

Für die Erzeugung der dem Subtrahierer SUB zur Eliminierung der Echoanteile zugeführten Bitgruppen ist ein eingangsseitig mit der Signalsendeleitung SD und der Sendetaktleitung STL verbundener Echokompensator EK vorgesehen, der abhängig von den auf der Signalsendeleitung auftretenden Digitalsignalen Momentanwerte von Kompensationssignalen in Form codierter Bitgruppen abgibt. Diese Momentanwerte können beispielsweise in Speicherzellen eines Festwertspeichers des Echokompensators gespeichert sein. Diese Speicherzellen werden nach Massgabe der dem Echokompensator zugeführten Sendesignale zur Abgabe der Bitgruppen angesteuert. Ausgangsseitig ist der Echokompensator mit ersten Eingängen eines Summierers SUM1 verbunden. An weiteren Eingängen werden diesem Summierer, wie im folgenden noch näher erläutert werden wird, die Kompensationssignale bei Schwankungen der Phasenlage der Abtastzeitpunkte korrigierende Korrektursignale in Form codierter Bitgruppen von einer Korrektureinrichtung KE zugeführt. Diese Korrektureinrichtung ist eingangsseitig mit der Signalsendeleitung SD verbunden. Der Ausgang des Summierers SUM1 ist an die bereits erwähnten Eingänge des Subtrahierers SUB angeschlossen.

In Fig. 1 ist schliesslich noch die bereits erwähnte Taktversorgungseinrichtung T ausschnittweise dargestellt. Sie weist einen Taktgenerator TG auf, der die Sendetaktimpulse und Empfangstaktimpulse abgibt. Diese Taktimpulse sind in ihrer Phase nach Massgabe von dem Taktgenerator zugeführten Verstellinformationen in vorgegebenen Phasenrasterschritten verschiebbar. Diese Verstellinformationen werden von einem als Akkumulator arbeitenden Vor-/Rückwärtszähler Z1 abgegeben, der an seinen Zählereingängen die bereits erwähnten, von der Empfangssteuerung ES bereitgestellten Steuerinformationen über das Leitungssystem SL zugeführt erhält. Dabei legt jeweils das die Richtung der erforderlichen Verschiebung angebende Binärsignal der Steuerinformationen die Zählrichtung des Vor-/Rückwärtszählers fest, während die Steuerimpulse als Zählimpulse dienen. Die einzelnen Steuerinformationen werden auf diese Weise zunächst akkumuliert. Erst bei Überschreiten eines vorgegebenen oberen Zählerstandes (obere Schwelle) bzw. bei Unterschreiten eines unteren Zählerstandes (untere Schwelle) wird an die Taktversorgungseinrichtung eine entsprechende Verstellinformation abgegeben, die dann eine Verschiebung der Phasenlage der Taktimpulse um einen vorgegebenen Phasenrasterschritt in der einen oder anderen Richtung bewirkt. Die Verstellinformationen steuern ausserdem einen weiteren Vor-/Rückwärtszähler Z2. Mit der Abgabe einer solchen Verstellinformation wird der Vor-/Rückwärtszähler Z1 gleichzeitig in seine Ausgangsstellung zurückgesetzt. Die aktuellen Zählerstände der beiden Vor-/Rückwärtszähler werden jeweils über ein Leitungssystem Z1L, Z2L an die bereits erwähnte Korrektureinrichtung KE für die Ermittlung der von der Phasenlage der Taktimpulse abhängigen Korrektursignale abgegeben. Die Korrektureinrichtung KE erhält ausserdem die Sendetaktimpulse von der Taktversorgungseinrichtung T zugeführt.

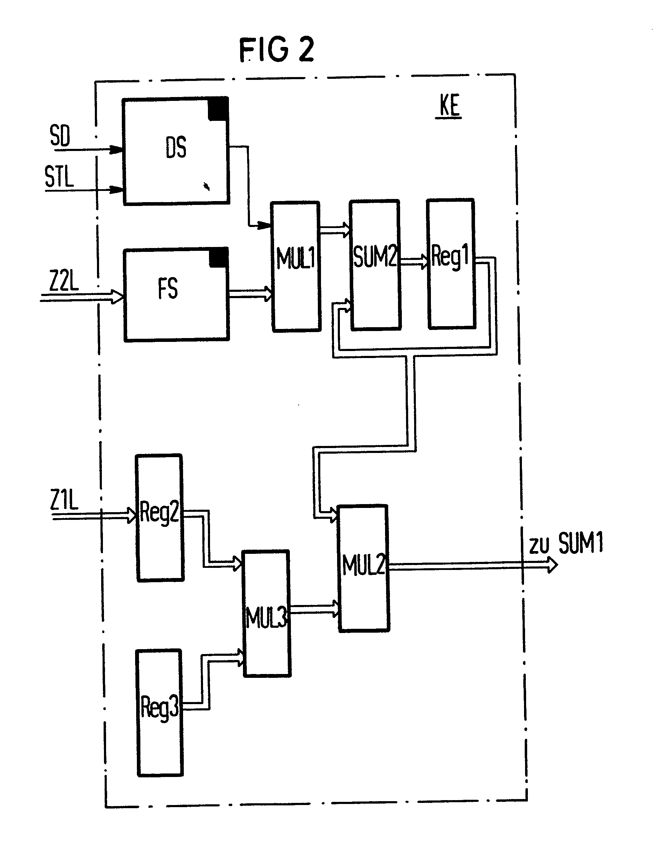

In Fig. 2 ist der Aufbau der Korrektureinrichtung KE detailliert dargestellt. Diese Korrektureinrichtung weist einen Signalspeicher DS auf, in dem die für eine vorgegebene Anzahl m von Sendetaktimpulsen auf der Signalsendeleitung SD auftretenden Digitalsignale (Signalbits) gespeichert werden können, d.h. es können die zu den Zeitpunkten $t_{(m-1)}$ bis $t$ auftretenden Digitalsignale gespeichert werden. Als Signalspeicher kann hier beispielsweise ein Schieberegister verwendet werden, dessen einzelne Registerstellen auslesbar sind. Weiterhin ist ein Festwertspeicher FS mit einer Mehrzahl von Speicherplätzen vorgesehen, in denen jeweils ein Momentanwert der Steigung eines typischen Echosignals in Form einer Bitgruppe gespeichert ist. Die Anzahl der Speicherplätze ist dabei so gewählt, dass für jede durch die Phasenrasterschritte festlegbare Phasenlage der Taktimpulse die Momentanwerte der Steigung eines Echosignals für m aufeinanderfolgende Taktimpulse speicherbar sind. Sind beispielsweise für die Verschiebung der Phasenlage 128 Phasenrasterschritte vorgesehen und sollen die Momentanwerte für acht aufeinanderfolgende Taktimpulse (Abtastpunkte) berücksichtigt werden, so sind 1024 Speicherplätze erforderlich. Für die Ansteuerung der Speicherplätze ist der Festwertspeicher mit seinen Adresseingängen mit dem Leitungssystem Z2L verbunden, über das er als Adressen die Zählerstände des Vor-/Rückwärtszählers Z2 zugeführt erhält. Die Zählerstände geben, wie bereits oben erwähnt, die Anzahl der Phasenrasterschritte an, um die die Phase der Taktimpulse gegenüber einer Ausgangslage verschoben ist. Unter jeder dieser durch die Zählerstände festgelegten Adressen sind die zu der jeweiligen Phasenlage gehörenden Momentanwerte der Steigung eines Echosignals für m aufeinanderfolgende Taktimpulse gespeichert, bei dem hier gewählten Beispiel also für acht Taktimpulse. Diese den einzelnen Taktimpulsen zugeordneten Momentanwerte werden nacheinander ausgelesen und in einem Multiplizierer MUL1 jeweils mit dem für den jeweiligen Taktimpuls in dem Signalspeicher DS gespeicherten Digitalsignal multipliziert. Hierzu werden die in dem Signalspeicher gespeicherten Digitalsignale ebenfalls nacheinander dem Multiplizierer zugeführt. Da es sich bei den auf der Signalsendeleitung SD auftretenden Digitalsignalen um Binärsignale handeln soll, läuft die Multiplikation darauf hinaus, dass für ein Logisch-1-Digitalsignal an den Ausgängen des Multiplizierers der gerade an seinen Eingängen anstehende Momentanwert in Form einer Bitgruppe abgegeben wird, während für ein Logisch-O-Digitalsignal ein Momentanwert «Null» abgegeben wird. Damit wird berücksichtigt, dass bei der Übertragung von Digitalsignalen lediglich die Logisch-1-Signale einen Beitrag zu den Echosignalen liefern.

Die Ausgänge des Multiplizierers MUL1 sind mit einem Akkumulator verbunden, der die von dem Multiplizierer abgegebenen Momentanwerte über eine der Anzahl m von Taktimpulsen entsprechende Zeitspanne aufsammelt und ein entsprechendes Summensignal in Form einer Bitgruppe an seinen Ausgängen abgibt. Dieser Akkumulator besteht aus einem Summierer SUM2 und aus einem diesem nachgeschalteten Register Reg1. Die Ausgänge dieses Registers sind mit ersten Eingängen des zugehörigen Summierers verbunden. Mit weiteren Eingängen ist der Summierer an die Ausgänge des Multiplizierers MUL1 angeschlossen.

Das gerade erwähnte Register Reg1 ist mit seinen Ausgängen ausserdem mit ersten Eingängen eines weiteren Multiplizierers MUL2 verbunden. An weiteren Eingängen erhält dieser Multiplizierer ein im Verhältnis der in dem Vor-/Rückwärtszähler Z1 der Taktversorgungseinrichtung T akkumulierten Steuerinformationen zu der oberen bzw. unteren Schwelle verringertes Zeit-Signal in codierter Form zugeführt. Die Gesamtgrösse dieses Zeit-Signals entspricht dabei einem Phasenrasterschritt der Taktsignale. Aus diesem verringerten Zeit-Signal und dem von dem Register Reg1 abgegebenen Summensignal bildet der Multiplizierer MUL2 das bereits erwähnte Korrektursignal und gibt dieses an den Summierer SUM1 ab. Für die Erzeugung des verringerten Zeit-Signals ist in der Korrektureinrichtung KE ein Register Reg2 vorgesehen, welches mit dem Leitungssystem Z1L für die Übernahme der in dem Vor-/Rückwärtszähler Z1 akkumulierten Steuerinformationen verbunden ist. Ausgangsseitig ist dieses Register an erste Eingänge eines Multiplizierers MUL3 angeschlossen. Weitere Eingänge dieses Multiplizierers sind mit einem Register Reg3 verbunden, in dem eine Konstante gespeichert ist, die die Gesamtgrösse eines Phasenrasterschrittes geteilt durch die Anzahl der zu der oberen bzw. unteren Schwelle gehörenden Steuerinformationen angibt. Aus dieser Konstanten und der in dem Register Reg2 gespeicherten Anzahl von Steuerinformationen bildet der Multiplizierer MUL3 das verringerte Zeit-Signal.

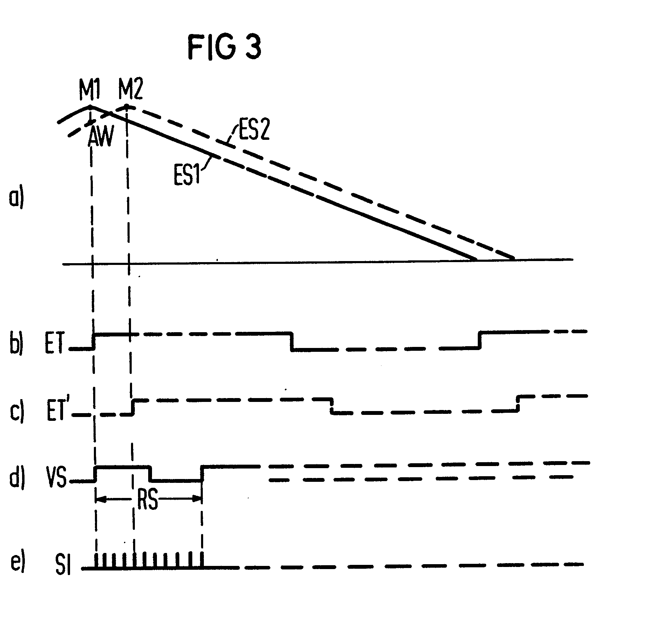

Anhand des in Fig. 3 dargestellten Impulsdiagramms soll noch einmal das erfindungsgemässe Verfahren zur Kompensation von Echosignalen verdeutlicht werden. Hierzu sind unter a zwei gegeneinander verschobene Echosignale ES1 und ES2 dargestellt. Die Maxima dieser Echosignale sind mit M1 bzw. M2 bezeichnet. Das Maximum M1 soll dabei beispielsweise mit der aufsteigenden Flanke eines Empfangstaktimpulses ET in der Empfangseinrichtung EE der Fig. 1 abgetastet werden (b in Fig. 3). Dies möge die Ausgangsphasenlage der von der Taktversorgungseinrichtung T abgegebenen Empfangstaktimpulse sein. Bei dieser Phasenlage wird das zusammen mit einem Digitalsignal empfangene Echosignal durch das zu diesem Zeitpunkt von dem Echokompensator EK abgegebene Kompensationssignal vollständig kompensiert. Tritt nun eine Veränderung der Phasenlage zwischen Sendetaktimpulsen und Empfangstaktimpulsen auf, so wäre für eine vollständige Kompensation eines Echosignals eine Verschiebung der Phasenlage dieser Taktimpulse erforderlich. Unter a in Fig. 3 ist als Beispiel angedeutet, dass das Maximum eines Echosignals nunmehr zeitlich verzögert auftritt (M2 des Echosignals ES2). Eine vollständige Kompensation dieses Echosignals durch ein von dem Echokompensator abgegebenes Kompensationssignal könnte nun beispielsweise dadurch erfolgen, dass die Phasenlage der Empfangstaktimpulse um einen bestimmten Betrag verschoben wird. Dies ist unter c in Fig. 3 durch den gestrichelten Verlauf der Empfangstaktimpulse ET' dargestellt. Die Verschiebung der Phasenlage möge dabei innerhalb eines Phasenrasterschrittes liegen, um den die Taktimpulse in der Taktversorgungseinrichtung T verschoben werden können. Ein dafür vorgesehener Verschiebetakt VS ist unter d in Fig. 3 dargestellt. Bei diesem Verschiebetakt ist zusätzlich ein Phasenrasterschritt RS eingezeichnet.

Anstelle einer sofortigen Verschiebung der Phasenlage werden nun bei dem erfindungsgemässen Verfahren die aufgrund der veränderten Phasenlage von der Empfangssteuerung ES abgegebenen Steuerinformationen zunächst in dem Vor-/Rückwärtszähler Z1 unter Beibehaltung der jeweils gerade eingestellten Phasenlage akkumuliert. Unter e sind die von der Empfangssteuerung ES bei Phasenschwankungen innerhalb eines Phasenrasterschrittes RS abzugebenden Steuerinformationen SI dargestellt. Dabei ist als Beispiel angedeutet, dass bei einer Veränderung der Phasenlage um einen Phasenrasterschritt zehn Steuerinformationen von der Empfangssteuerung an den Vor-/Rückwärtszähler Z1 abgegeben werden. Diese Anzahl der Steuerinformationen stellt für den Vor-/Rückwärtszähler die obere bzw. untere Schwelle dar, bei deren Erreichen an den Taktgenerator TG eine Verstellinformation für die Verschiebung der Phasenlage um einen Phasenrasterschritt RS abgegeben wird.

Ein Vergleich der unter a in Fig. 3 ausschnittweise dargestellten Echosignale zeigt, dass das Echosignal ES2 durch sein zeitlich verzögertes Auftreten zu dem durch die Empfangstaktimpulse ET festgelegten Abtastzeitpunkt lediglich mit einem Amplitudenwert AW wirksam ist. Dagegen wird von dem Echokompensator EK (Fig. 1) weiterhin ein dem Echosignal ES1 entsprechendes, gegenüber dem Amplitudenwert AW des Echosignals ES2 zu grosses Kompensationssignal abgegeben. Ein damit entstehender, nicht kompensierter Echoanteil wird nun mit Hilfe des von der Korrektureinrichtung KE (Fig. 2) gebildeten Korrektursignals kompensiert. Für die Bildung dieses Korrektursignals sind bei dem in Fig. 3 gewählten Beispiel vier Steuerinformationen in dem Vor-/Rückwärtszähler Z1 akkumuliert. Anhand dieses Zählerstandes, der in das Register Reg2 der Korrektureinrichtung KE übernommen wird, und der in dem Register Reg3 gespeicherten Konstanten ermittelt der Multiplizierer MUL3 der Korrektureinrichtung das bereits oben erwähnte verringerte Zeit-Signal. In die Konstante, die das einem Phasenrasterschritt RS entsprechende Zeitintervall geteilt durch die obere bzw. untere Schwelle des Vor-/Rückwärtszählers Z1 angibt, geht die obere bzw. untere Schwelle gemäss e in Fig. 3 mit einem Wert von 10 ein.

Da bei dem hier gewählten Beispiel die Phasenlage der Empfangstaktsignale bezogen auf eine Ausgangsphasenlage sich lediglich innerhalb eines für die Verschiebung der Phasenlage massgebenden Phasenrasterschrittes RS verändert haben soll, ist durch die in dem Vor-/Rückwärtszähler Z1 akkumulierten Steuerinformationen die obere bzw. untere Schwelle nicht überschritten. Demzufolge erhalten der Taktgenerator TG und der Vor-/Rückwärtszähler Z2 keine Verstellinformation zugeführt. Damit befindet sich der Vor-/Rückwärtszähler Z2 noch in seiner Ausgangslage. Mit dem in dieser Ausgangslage abgegebenen Zählerstand wird der Festwertspeicher FS für die Abgabe der dieser Ausgangsphasenlage zugeordneten Momentanwerte der Steigung eines Echosignals angesteuert. Aus diesen Momentanwerten wird dann unter Berücksichtigung des verringerten Zeit-Signals das für die Ausgangsphasenlage für eine Kompensation der Echosignale erforderliche Korrektursignal ermittelt.

Unter Bezugnahme auf Fig. 3 wurde vorstehend nur der Fall betrachtet, dass lediglich eine geringe, innerhalb eines Phasenrasterschrittes liegende Veränderung der Phasenlage der Taktimpulse auftritt. Bei einer über einen Phasenrasterschritt hinausgehenden Veränderung der Phasenlage wird durch die in dem Vor-/Rückwärtszähler Z1 akkumulierten Steuerinformationen je nach der Richtung der Veränderung der Phasenlage die obere bzw. untere Schwelle überschritten. Damit gibt der Vor-/Rückwärtszähler eine entsprechende Verstellinformation an den Taktgenerator TG der Taktversorgungseinrichtung T ab. Danach wird der Vor-/Rückwärtszähler Z1 in seine Ausgangsstellung zurückgesetzt. Eine geringe, innerhalb des nunmehr in Frage kommenden Phasenrasterschrittes liegende Veränderung der Phasenlage wird dann wieder in der bereits oben dargestellten Weise behandelt.

Abschliessend sei hier noch angemerkt, dass die Momentanwerte der Steigung eines Echosignals zu einem bestimmten Abtastzeitpunkt auch aus den zu diesem Abtastzeitpunkt sich ergebenden Momentanwerten der Steigung des in Frage kommenden unverzerrten, von der Sendeeinrichtung der jeweiligen Signalübertragungseinrichtung abgegebenen Digitalsignals abgeleitet werden können. Für die Speicherung dieser Momentanwerte ist dann der in Fig. 2 dargestellte Festwertspeicher FS durch einen Schreib-Lese-Speicher zu ersetzen.

Die in Fig. 2 dargestellte Korrektureinrichtung KE kann anstelle der in Fig. 2 dargestellten Schaltungsteile für die Ermittlung der Korrektursignale auch einen Mikroprozessor enthalten.

Abschliessend sei angemerkt, dass unter den vorstehend genannten Digitalsignalen Datensignale, Sprachsignale und/oder Textinformationssignale zu verstehen sind.

## Patentansprüche

1. Verfahren zur Kompensation von Echosignalen in für die Duplexübertragung von Digitalsignalen im Gleichlageverfahren mit einer Zweidraht-Leitung verbundenen, jeweils eine Sendeeinrichtung (SE) und eine Empfangseinrichtung (EE) aufweisenden Signalübertragungseinrichtungen (DUE), in denen einerseits jeweils für die Kompensation der Echosignale, die bei der Abgabe von Digitalsignalen von der Sendeeinrichtung einer Signalübertragungseinrichtung her an die Zweidraht-Leitung in der zugehörigen Empfangseinrichtung auftreten, von einem Echokompensator (EK) Kompensationssignale erzeugt werden, welche in der Empfangseinrichtung der betreffenden Signalübertragungseinrichtung von den in zeitlich konstanten Abständen festgelegten Abtastzeitpunkten mit den Echosignalen empfangenen Digitalsignalen subtrahiert werden, und in denen andererseits für eine Regelung der Phasenlage von durch ihr Auftreten die Abtastzeitpunkte festlegenden Taktimpulsen einer Taktimpulsfolge dienende Verstellinformationen von der Empfangseinrichtung an eine Taktversorgungseinrichtung (T) abgegeben werden, dadurch gekennzeichnet, dass bei empfangsseitiger Ermittlung von eine Verschiebung der Phasenlage der Taktimpulse um einen innerhalb eines vorgegebenen Phasenrasterschrittes (RS) liegenden Betrag fordernden Steuerinformationen diese unter Beibehaltung der jeweils gerade eingestellten Phasenlage akkumuliert werden, dass anhand der akkumulierten Steuerinformationen solche mit den genannten Kompensationssignalen zu summierende Korrektursignale gebildet werden, dass durch die geforderte, jedoch nicht durchgeführte Verschiebung der Phasenlage der Taktimpulse unkompensiert gebliebene Echosignale aufgehoben werden, und dass bei Überschreiten einer vorgegebenen oberen Schwelle bzw. Unterschreiten einer vorgegebenen unteren Schwelle durch die akkumulierten Steuerinformationen lediglich die Phasenlage der Taktimpulse um einen Phasenrasterschritt verschoben wird.

2. Verfahren nach Anspruch 1, dadurch gekennzeichnet, dass für die Ableitung eines Korrektursignals zu einem bestimmten Abtastzeitpunkt eine vorgegebene Anzahl von Einzelsignalen aufsummiert wird, die aus aufeinanderfolgenden Digitalsignalen jeweils multipliziert mit einem Momentanwert der Steigung des dem jeweiligen Digitalsignal zu dem betreffenden Abtastzeitpunkt zugehörigen Echosignals ermittelt werden, und dass die Summe der Einzelsignale mit einem im Verhältnis der akkumulierten Steuerinformationen zu der oberen bzw. unteren Schwelle verringerten Zeit-Signal, das in seiner Gesamtgrösse einen Phasenrasterschritt der Taktimpulse entspricht, multipliziert wird.

3. Verfahren nach Anspruch 2, dadurch gekennzeichnet, dass der Momentanwert der Steigung eines Echosignals zu einem bestimmten Abtastzeitpunkt aus dem zu diesem Abtastzeitpunkt sich ergebenden Momentanwert der Steigung des in Frage kommenden unverzerrten, von der Sendeeinrichtung (SE) der jeweiligen Signalübertragungseinrichtung (DUE) abgegebenen Digitalsignals abgeleitet wird.

4. Verfahren nach Anspruch 2, dadurch gekennzeichnet, dass der Momentanwert der Steigung eines Echosignals zu einem bestimmten Abtastzeitpunkt aus dem zu diesem Abtastzeitpunkt sich ergebenden Momentanwert der Steigung eines typischen Echosignals, dessen Steigung für jeden Phasenrasterschritt gespeichert ist, abgeleitet wird.

5. Schaltungsanordnung zur Durchführung des Verfahrens nach Anspruch 1 in Signalübertragungseinrichtungen (DUE) mit jeweils einer Digitalsignale an eine Zweidraht-Leitung (L) abgebenden Sendeeinrichtung (SE), einer Digitalsignale von dieser Zweidraht-Leitung zu festgelegten Abtastzeitpunkten aufnehmenden Empfangseinrichtung (EE), einem für die Kompensation der in der Empfangseinrichtung auftretenden Echosignale diesen entsprechende Kompensationssignale an die Empfangseinrichtung abgebenden Echokompensator (EK) und mit einer Taktversorgungseinrichtung (T), der von der zugehörigen Empfangseinrichtung Verstellinformationen für die Regelung der Phasenlage von durch ihr Auftreten die Abtastzeitpunkte festlegenden Taktimpulsen zugeführt werden, dadurch gekennzeichnet, dass die Taktversorgungseinrichtung (T) einen Akkumulator (Z1) aufweist, welcher einerseits ihm von der Empfangseinrichtung (EE) zugeführte, eine Verschiebung der Phasenlage der Taktimpulse um einen innerhalb eines vorgegebenen Phasenrasterschrittes (RS) liegenden Betrag fordernde Steuerinformationen unter Beibehaltung der jeweils gerade eingestellten Phasenlage akkumuliert und welcher andererseits bei Überschreiten einer vorgegebenen oberen Schwelle bzw. bei Unterschreiten einer vorgegebenen unteren Schwelle durch die akkumulierten Steuerinformationen eine in der Taktversorgungseinrichtung die Verschiebung der Phasenlage der Taktimpulse um einen Phasenrasterschritt bewirkende Verstellinformation abgibt und dabei die bis dahin akkumulierten Steuerinformationen löscht, und dass in der jeweiligen Signalübertragungseinrichtung (DUE) eine Korrektureinrichtung (KE) vorgesehen ist, welche anhand der akkumulierten Steuerinformationen solche mit den genannten Kompensationssignalen zu summierende Korrektursignale abzugeben gestattet, dass durch die geforderte, jedoch nicht durchgeführte Verschiebung der Phasenlage der Taktimpuls unkompensiert gebliebene Echosignale aufgehoben werden.

6. Schaltungsanordnung nach Anspruch 5, dadurch gekennzeichnet, dass die Korrektureinrichtung (KE) für die Erzeugung eines zu einem bestimmten Abtastzeitpunkt abzugebenden Korrektursignals eine erste Steuereinrichtung (DS, FS, MUL1) aufweist, welche nacheinander eine bestimmte Anzahl von Einzelsignalen, die aus aufeinanderfolgenden Digitalsignalen jeweils multipliziert mit dem Momentanwert der Steigung des dem jeweiligen Digitalsignal zu dem betreffenden Abtastzeitpunkt zugehörigen Echosignals gebildet sind, von ihrem Ausgang abgibt, dass ein weiterer Akkumulator (SUM2, Reg1) vorgesehen ist, der die von der ersten Steuereinrichtung abgegebenen Einzelsignale zugeführt erhält und ein den ihm zugeführten Einzelsignalen entsprechendes Summensignal abgibt, dass eine zweite Steuereinrichtung (Reg2, Reg3, MUL3) vorgesehen ist, welche für die Übernahme der akkumulierten Steuerinformationen einangsseitig mit dem Akkumulator (Z1) der Taktversorgungseinrichtung (T) verbunden ist und welche an ihrem Ausgang ein im Verhältnis der akkumulierten Steuerinformationen zu der oberen bzw. unteren Schwelle verringertes Zeit-Signal, welches in seiner Gesamtgrösse einem Phasenrasterschritt der Taktimpulse entspricht, abgibt, und dass ein Multiplizierer (MUL2) vorgesehen ist, der eingangsseitig mit dem Ausgang der ersten Steuereinrichtung und mit dem Ausgang der zweiten Steuereinrichtung verbunden ist und an seinem Ausgang das Korrektursignal abgibt.

7. Schaltungsanordnung nach Anspruch 5 oder 6, dadurch gekennzeichnet, dass der Akkumulator (Z1) der Taktversorgungseinrichtung (T) aus einem Vor-/Rückwärtszähler besteht.

8. Schaltungsanordnung nach Anspruch 6 oder 7, dadurch gekennzeichnet, dass die erste Steuereinrichtung einen ersten Speicher (FS) mit einer Mehrzahl von Speicherplätzen aufweist, in denen die Momentanwerte der Steigung eines Echosignals für die einzelnen Phasenrasterschritte der Taktimpulse gespeichert sind, dass ein zweiter Speicher (DS) für die Zwischenspeicherung einer vorgegebenen Anzahl von aufeinanderfolgenden Digitalsignalen vorgesehen ist und dass ein Multiplizierer (MUL1) vorgesehen ist, der nacheinander die zwischengespeicherten Digitalsignale jeweils mit dem Momentanwert der Steigung des dem jeweiligen Digitalsignal zu dem betreffenden Abtastzeitpunkt zugehörigen Echosignals multipliziert an seinem Ausgang als Einzelsignale abgibt.

9. Schaltungsanordnung nach einem der Ansprüche 6 bis 8, dadurch gekennzeichnet, dass die zweite Steuereinrichtung ein erstes Register (Reg2) für die Übernahme der in dem Akkumulator (Z1) der Taktversorgungseinrichtung (T) akkumulierten Steuerinformationen aufweist, dass ein zweites Register (Reg3) vorgesehen ist, in welchem eine aus dem Zeit-Signal und der oberen bzw. unteren Schwelle abgeleitete Grösse gespeichert ist, und dass mit den beiden Registern ein Multiplizierer (MUL3) verbunden ist, der das entsprechend der akkumulierten Steuerinformationen verringerte Zeit-Signal abgibt.

10. Schaltungsanordnung nach einem der Ansprüche 5 bis 9, dadurch gekennzeichnet, dass die Korrektureinrichtung (KE) einen Mikroprozessor enthält.

**Claims**

1. A method of compensating echo signals in signal transmission devices (DUE) which, for the duplex transmission of digital signals in a duplex channel system are connected to a two-wire line and which each include a transmitting device (SE) and a receiving device (EE) and in which on the one hand for the compensation of the echo signals which when digital signals are emitted from the transmitting device of a signal transmission device to the two-wire line, occur in the associated receiving device, and echo compensator (EK) generates compensation signals which, in the receiving device of the respective signal transmission device, are substracted from the digital signals which are received together with the echo signals at sampling times which occur at constant time intervals, and in which on the other hand items of adjusting information which serve to regulate the phase position of clock pulses of a clock pulse sequence – the occurrence of which determine the sampling times – are emitted from the receiving device to a clock supply device (T), characterised in that when items of control information are detected at the receiving end which request a displacement of the phase position of the clock pulses by an amount within a predetermined phase raster element (RS), these items of control information are accumulated, maintaining the currently set phase position, that on the basis of the accumulated items of control information correction signals are formed which are to be added to the aforesaid compensation signals, that echo signals, remaining uncompensated as a result of the requested yet non-implemented displacement of the phase position of the clock pulses, are cleared, and that the phase position of the clock pulses is only displaced by one phase raster element when a given upper threshold is overshot or a given lower threshold is undershot by the accumulated items of control information.

2. A method as claimed in claim 1, characterised in that a correction signal is obtained in that at a specified sampling time a predetermined number of individual signals is added, where said individual signals consist of consecutive digital signals, each multiplied by an instantaneous value of the slope of the echo signal assigned to the respective digital at the respective sampling time, and that the sum of the individual signals is multiplied by a time signal which is reduced in the ratio of the accumulated items of control information to the upper/lower threshold and which corresponds in respect of its overall value to one phase raster element of the clock pulses.

3. A method as claimed in claim 2, characterised in that the instantaneous value of the slope of an echo signal at a specified sampling time is derived from the instantaneous value, which occurs at this sampling time, of the slope of the respective, undistorted digital signal which is emitted from the transmitting device (SE) of the respective signal transmission device (DUE).

4. A method as claimed in claim 2, characterised in that the instantaneous value of the slope of an echo signal at a specified sampling time is derived from the instantaneous value, which occurs at this sampling time, of the slope of a typical echo signal, the increase of which is stored for each phase raster element.

5. A circuit arrangement for implementing the method claimed in claim 1 in signal transmission devices (DUE) which each include a transmitting device (SE) which emits digital signals to a two-wire line, a receiving device (EE) which receives digital signals from this two-wire line at specified sampling times, an echo compensator (EK) which, in order to compensate the echo signals occurring in the receiving device, emits compensation signals corresponding to said echo signals to the receiving device, and a clock supply device (T) which is supplied, by the associated receiving device, with items of adjusting information for the regulation of the phase position of clock pulses, the occurrence of which determine the sampling times, characterised in that the clock supply device (T) includes an accumulator (Z1) which on the one hand accumulates items of control information with which it is supplied by the receiving device (EE) and which request a displacement of the phase position of the clock pulses by an amount within a predetermined phase raster element (RS) whilst maintaining the currently set phase position, and which on the other hand, when a predetermined upper threshold is overshot or a predetermined lower threshold is undershot by the accumulated items of control information, emits an item of adjusting information which, in the clock supply device, causes a displacement of the phase position of the clock pulses by one phase raster element and thereby erases the previously accumulated items of control information, and that the respective signal transmission device (DUE) includes a correction device (KE) which, on the basis of the accumulated items of control information, permits the emission of correction signals which are to be added to the aforesaid compensation signals, and that echo signals, remaining uncompensated as a result of the requested yet non-implemented displacement of the phase position of the clock pulses, are cleared.

6. A circuit arrangement as claimed in claim 5, characterised in that for the generation of a correction signal to be emitted at a specified sampling time the correction device (KE) includes a first control device (DS, FS, MUL1) which emits successively from its output a specified number of individual signals which comprise consecutive digital signals, each multiplied by the instantaneous value of the slope of the echo signal assigned to the respective digital signal at the respective sampling time, that a further accumulator (SUM2, Reg1) is provided which is supplied with the individual signals emitted from the first control device and which emits a sum signal corresponding to the individual signals with which it has been supplied, that a second control device (Reg2, Reg3, MUL3) is provided which, in order that it may receive the accumulated items of control information, is connected at its input to the accumulator (Z1) of the clock supply device (T) and which emits at its output a time signal which is reduced in the ratio of the accumulated items of control information to the upper/lower threshold and which corresponds in its overall value to one phase raster element of the clock pulses and that a multiplier (MUL2) is provided which at its input is connected to the output of the first control device and to the output of the second control device and which at its output emits the correction signal.

7. A circuit arrangement as claimed in claim 5 or 6, characterised in that the accumulator (Z1) of the clock supply device (T) comprises a forwards/ backwards counter.

8. A circuit arrangement as claimed in claim 6 or 7, characterised in that the first control device includes a first store (FS) which contains a plurality of store locations which store the instantaneous values of the slope of an echo signal for the individual phase raster elements of the clock pulses, and that a second store (DS) is provided for the intermediate storage of a predetermined number of consecutive digital signals, and that a multiplier (MUL1) is provided by which the intermediate store digital signals, each multiplied by the instantaneous value of the slope of the echo signal, assigned to the respective digital signal at the respective sampling time, are consecutively emitted from its output as individual signals.

9. A circuit arrangement as claimed in one of the claims 6 to 8, characterised in that the second control device includes a first register (Reg2) which serves to receive the items of control information accumulated in the accumulator (Z1) of the clock supply device (T), that a second register (Reg3) is provided which stores a value derived from the signal and the upper/lower threshold and that the two registers are connected to a multiplier (MUL3) which emits the time signal which has been reduced in accordance with the accumulated items of control information.

10. A circuit arrangement as claimed in one of the claims 5 to 9, characterised in that the correction device (KE) includes a microprocessor.

**Revendications**

1. Procédé pour compenser les signaux d'écho dans des dispositifs de transmission de signaux (DUE), qui sont reliés, pour la transmission en duplex de signaux de données suivant l'exploitation des canaux en duplex, avec une ligne bifilaire, et dont chacun comporte un dispositif d'émission (SE) et un dispositif de réception (EE), dispositifs de transmission de signaux (DUE) dans chacun desquels sont produits, d'une part, pour la compensation des signaux d'écho qui apparaissent dans le dispositif de réception associé lors de l'émission de signaux numériques du dispositif d'émission d'un dispositif de transmission de signaux vers le dispositif de réception associé, des signaux de compensation produits par un compensateur d'échos (EK), qui soustrait, dans le dispositif de réception du dispositif de transmission des signaux concerné, des signaux numériques qui sont reçus avec les signaux d'échos à des instants d'échantillonnage déterminés avec un intervalle de temps constant, et dans lequel, d'autre part, les informations de réglage sont envoyées du dispositif de réception à un dispositif d'alimentation en signaux de cadence (T), lesdites informations de réglage servant au réglage de la position de phases d'impulsions de cadence d'un train d'impulsions de cadence déterminant par son apparition, les instants d'échantillonnage, caractérisé par le fait
— que dans le cas où l'on détecte, du côté réception, des informations de commande qui exigent un décalage de la position de phase des impulsions de cadence d'une valeur se situant à l'intérieur d'un pas de trame de phase (RS) donné à l'avance, celles-ci sont accumulées en conservant la position de phase qui vient d'être réglée;
— qu'à l'aide des informations de commande accumulées, on forme des signaux de correction à additionner ou des signaux de compensation, et qui sont telles que les signaux d'échos qui n'ont pas été compensés par le décalage, demandé mais non effectué, de la position de phase des impulsions de cadence, et
— que dans le cas où l'on passe au-delà d'un seuil supérieur prédéterminé ou en de çà d'un seuil inférieur prédéterminé, seule la position de phases des impulsions de cadence est décalée d'un pas de trame de phases par les informations de commande accumulées.

2. Procédé selon la revendication 1, caractérisé par le fait que pour dériver un signal de correction à un instant déterminé d'échantillonage, on additionne un nombre prédéterminé de signaux individuels qui sont déterminés à partir de signaux numériques successifs dont chacun est multiplié par une valeur instantanée de l'accroissement du signal d'écho qui est associé au signal numérique concerné à l'instant d'échantillonnage concerné, et que la somme des signaux individuels est multipliée d'un signal-temps diminué dans le rapport entre les informations de commande accumulées et le seuil supérieur ou inférieur, lequel signal-temps correspond, du point de vue de sa valeur totale, à un pas de trame de phase des impulsions de cadence.

3. Procédé selon la revendication 2, caractérisé par le fait que la valeur instantanée de l'accroissement d'un signal d'écho est dérivée, à un instant d'échantillonnage déterminé, à partir de la valeur instantanée de l'accroissement, résultant audit instant d'échantillonnage, du signal numérique envisagé et non déformé, qui est émis par le dispositif d'émission (SE) du dispositif de transmission de signaux concernés (DUE).

4. Procédé selon la revendication 2, caractérisé par le fait que la valeur instantanée de l'accroissement d'un signal d'écho est, à un instant d'échantillonnage déterminé, dérivée à partir de la valeur instantanée de l'acroissement, audit instant d'échantillonnage, d'un signal d'écho type dont l'accroissement est mémorisé pour chaque pas de trame de phase.

5. Montage pour la mise en œuvre du procédé selon la revendication 1 dans des dispositifs pour la transmission de signaux (DUE) dont chacun comporte un dispositif d'émission (SE) qui émet des signaux numériques à un conducteur bifilaire (L), un dispositif de réception (EE) qui reçoit, à des instants d'échantillonnage déterminés des signaux numériques de ce conducteur bifilaire, un compensateur d'écho (EK) émettant pour le dispositif de réception des signaux de compensation pour la compensation des signaux d'écho qui apparaissent dans le dispositif de réception, et avec un dispositif d'alimentation en signaux de cadence (T) et auquel on applique des informations de réglage provenant du dispositif de réception associé, en vue du réglage de la position de phase d'impulsions de cadence qui détermine, par leur apparition, les points d'échantillonnage, caractérisé par le fait que le dispositif d'alimentation en signaux de cadence (T) comporte un accumulateur (Z1) qui accumule, d'une part, des informations de commande qui exigent un décalage de la position de phase des impulsions de cadence d'une valeur qui se situe à l'intérieur d'un pas de trame de phase prédéterminé (RS) tout en conservant la position de phase qui vient d'être réglée, et qui, d'autre part, dans le cas d'un dépassement d'un seuil supérieur prédéterminé ou d'un dépassement vers le bas d'un seuil inférieur prédéterminé, émet, par les informations de commande accumulées, une information de décalage qui provoque dans le dispositif d'alimentation en impulsions de cadence, le décalage de la position de phases des impulsions de cadence d'un pas de trame de phase, en effaçant les informations de commande qui ont été accumulées jusque là, et qu'il est prévu dans le dispositif de transmission de signaux concerné (DUE) un dispositif de correction (KE) qui, à l'aide des informations de commande accumulées permet l'émission de signaux de correction additionnés auxdits signaux de compensation, et cela de telle manière que par le décalage, exigé mais non encore réalisé, de la position de phase des impulsions de cadence, les signaux d'écho non compensés sont supprimés.

6. Montage selon la revendication 5, caractérisé par le fait que le dispositif de correction (KE) pour la production d'un signal de correction à émettre à un instant déterminé de l'échantillonnage, comporte un premier dispositif de commande (DS, FS, MUL1) qui émet, à sa sortie, successivement un nombre déterminé de signaux individuels qui sont formés par des signaux individuels dont chacun est multiplié par la valeur instantanée de l'accroissement du signal d'écho qui est associé au signal numérique concerné, à l'instant d'échantillonnage concerné, qu'il est prévu un second accumulateur (SUM2, Reg1) qui reçoit les signaux individuels qui sont fournis par le premier dispositif de commande et qui émet un signal de somme qui correspond aux signaux individuels qui lui ont été fournis, qu'il est prévu un second dispositif de commande (Reg2, Reg3, MUL3) qui est relié du côté entrée avec l'accumulateur (Z1) du dispositif d'alimentation en cadences (T) en vue de la prise en charge des informations de commande accumulées, et qui, à sa sortie, émet un signal-temps diminué dans le rapport entre les informations de commande accumulées et le seuil supérieur ou inférieur, lequel signal-temps qui correspond, du point de vue de sa valeur totale, à un pas de trame de phase des impulsions de cadence, et qu'il est prévu un multiplicateur (MUL2) qui, du côté entrée, est relié à la sortie du premier dispositif de commande et à la sortie du second dispositif de commande et émet à sa sortie, le signal de correction.

7. Montage selon la revendication 5 ou 6, caractérisé par le fait que d'accumulateur (Z1) du dispositif d'alimentation en cadences (T), est constitué par un compteur progressif/régressif.

8. Montage selon la revendication 6 ou 7, caractérisé par le fait que le premier dispositif de commande comporte une première mémoire (FS) avec une pluralité d'emplacements de mémorisation dans lesquels sont mémorisées les valeurs instantanées de l'accroissement d'un signal d'écho pour les différents pas de trame de phase des impulsions de cadence, qu'il est prévu une seconde mémoire (DS) pour la mémorisation temporaire d'un nombre prédéterminé de signaux numériques successifs, et qu'il est prévu un multiplicateur (MUL1) qui multiplie successivement les signaux numériques mémorisés temporairement, respectivement par la valeur instantanée de l'accroissement du signal d'écho du signal numérique, à l'instant d'échantillonnage concerné, pour ensuite les émettre à sa sortie sous la forme de signaux individuels.

9. Montage selon l'une des revendications 6 à 8, caractérisé par le fait que le second dispositif de commande comporte un premier registre (Reg2) pour la prise en charge des informations de commande accumulées dans l'accumulateur (Z1) du dispositif d'alimentation en cadences (T), qu'il est prévu un second registre (Reg3) dans lequel est mémorisée une grandeur qui est dérivée du signal-temps et de seuil supérieur ou inférieur, et qu'avec les deux registres est relié un multiplicateur (MUL3) qui émet le signal-temps diminué en fonction des informations de commande accumulées.

10. Montage selon l'une des revendications 5 à 9, caractérisé par le fait que le dispositif de correction (KE) comporte un microprocesseur.

# FIG 1

FIG 2

# FIG 3